# EUROPEAN PATENT APPLICATION

(11) **EP 2 557 654 A2**
(43) Date of publication of application: **13.02.2013**
(21) Application number: 12173095.6
(22) Date of filing: 22.06.2012
(51) Int. Cl.: H02J 7/00

(54) **Energy storage apparatus and energy storage system**

(30) Priority: 28.06.2011 JP 2011143434
(71) Applicant: Kabushiki Kaisha Toshiba, Minato-ku, Tokyo 105-8001 (JP)
(72) Inventor: Mizutani, Mami, Tokyo, Tokyo 105-8001 (JP); Nakamura, Kunio, Tokyo, Tokyo 105-8001 (JP); Tagaki, Kikuo, Tokyo, Tokyo 105-8001 (JP); Sakata, Yasuji, Tokyo, Tokyo 105-8001 (JP); Tohara, Masahiro, Tokyo, Tokyo 105-8001 (JP)
(74) Representative: Günther, Constantin

(57) **Abstract**

According to one embodiment, an energy storage apparatus (10) includes a DC/DC convertor (12) comprising a discharge terminal (TA) and a charge terminal (TB), the DC/DC convertor (12) being configured to set up a voltage of a DC power supplied from the discharge terminal (TA) and to output the DC power from the charge terminal (TB), a plurality of switches (S1 to S4) configured to switch connections between a rechargeable batteries (4 to 7) and a first connection terminal (T1) electrically connected to an external device, a second connection terminal (T2) electrically connected to the discharge terminal (TA), and a third connection terminal (T3) electrically connected to the charge terminal (TB), and a controller (11) configured to control operations of the DC/DC convertor (12) and the plurality of switches (S1 to S4). The controller (11) controls the DC/DC convertor (12) to perform charge and discharge between a rechargeable battery connected to the discharge terminal (TA) via the switches (S1 to S4) and a rechargeable battery connected to the charge terminal (TB) via the switches (S1 to S4).

## Description

### FIELD

Embodiments described herein relate generally to an energy storage apparatus and an energy storage system.

### BACKGROUND

Recently, there has been an increase in interest in power facilities that generate electricity from renewable energy sources without emitting greenhouse gases. However, electricity generation using renewable energy sources poses problems in controlling the amount of electricity supplied and maintaining a stable supply.

In the future, as the number of electricity generation facilities using renewable energy sources increases, electricity supply may become unstable because of the imbalance between short-term demand and available power, reducing the dependability of electricity supply.

To improve unstable electricity supply in a power grid, deployment of an energy storage system in the grid or at consumer premises (such as buildings and factories) has been considered in order to realize cooperation between the grid and the consumer premises. Since the energy storage system needs a large storage capacity, it usually comprises a rechargeable battery incorporating multiple secondary cells.

### BRIEF DESCRIPTION OF THE DRAWINGS

FIG. 1 illustrates an example of configuration of a energy storage apparatus and a energy storage system according to an embodiment.
FIG. 2 illustrates an example of configuration of the secondary battery unit of the energy storage apparatus and the energy storage system as shown in FIG 1.
FIG. 3 illustrates an example of charge refresh in the energy storage apparatus and the energy storage system according to an embodiment.

### DETAILED DESCRIPTION

In general, according to one embodiment, an energy storage apparatus comprising: a DC/DC convertor comprising a discharge terminal and a charge terminal, the DC/DC convertor being configured to set up a voltage of a DC power supplied from the discharge terminal and to output the DC power from the charge terminal; a plurality of switches configured to switch connections between a rechargeable batteries and a first connection terminal electrically connected to an external device, a second connection terminal electrically connected to the discharge terminal, and a third connection terminal electrically connected to the charge terminal; and a controller configured to control operations of the DC/DC convertor and the plurality of switches. The controller is configured to control the DC/DC convertor to perform charge and discharge between a rechargeable battery connected to the discharge terminal via the switches and a rechargeable battery connected to the charge terminal via the switches.

In the following, the energy storage apparatus and the energy storage system according to the embodiment will be described in details with reference to the drawings.

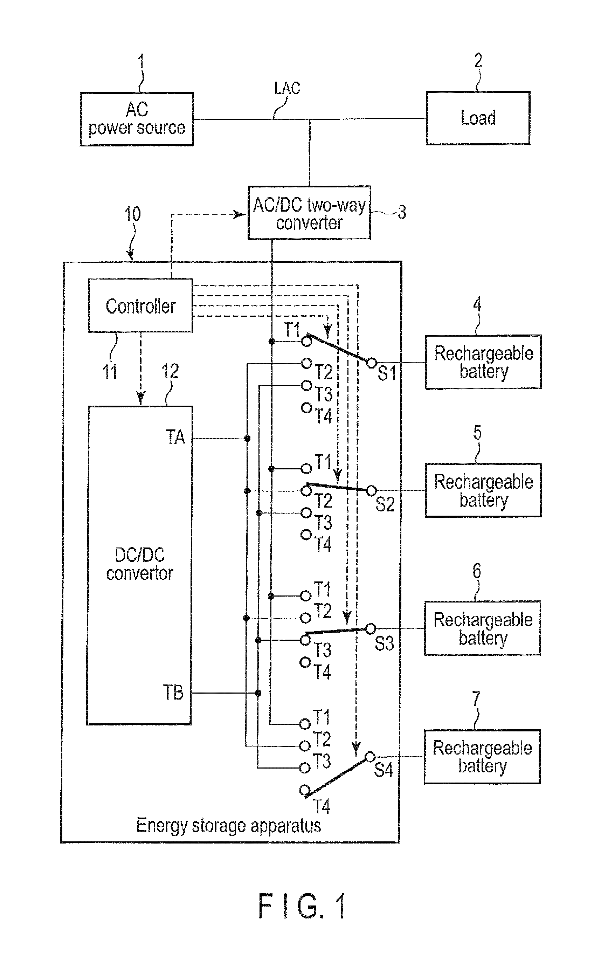

FIG. 1 roughly illustrates an example of configuration of the energy storage apparatus and the energy storage system according to the embodiment.

The energy storage system according to the embodiment including a plurality of rechargeable batteries 4 to 7, an energy storage apparatus 10 connected to rechargeable batteries 4 to 7, and an AC/DC two-way converter 3 configured to perform current conversion between energy to be supplied to the energy storage apparatus 10 and energy output from the energy storage apparatus 10. The energy storage system is interconnected with an AC power source 1. In the present embodiment, four rechargeable batteries 4 to 7 are provided; however, the number of rechargeable batteries is not limited thereto.

The AC/DC two-way converter 3 is connected to an AC power supply line LAC between the AC power source 1 and a load 2 via an interconnecting transformer not shown in the figures. The AC/DC two-way converter 3 converts AC power supplied from the AC power supply line LAC to DC power to supply the DC power to the energy storage apparatus 10, and converts the DC power output from the energy storage apparatus 10 to AC power to supply the AC power to the AC power supply line LAC. For example, the AC/DC two-way converter 3 converts power of direct voltage of 200 to 700 V to power of alternating voltage 300 V, and vice versa. The interconnecting transformer sets up and outputs the voltage of AC power output from the AC/DC two-way converter 3. The interconnecting transformer sets up AC power of 300 V to 3.3, 6.6 or 22 kV.

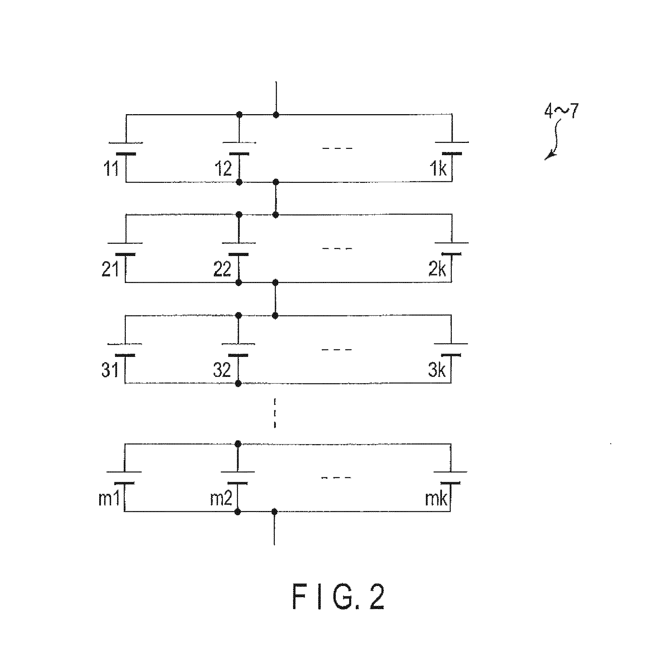

FIG. 2 illustrates configuration examples of rechargeable batteries 4 to 7. Each of rechargeable batteries 4 to 7 includes a plurality of secondary cells 11 to mk, a voltage detector (not shown in the figures) to detect voltages of the plurality of secondary cells 11 to mk, a current detector (not shown in the figures) to detect currents flowing rechargeable batteries 4 to 7, and a communication unit (not shown in the figures) to communicate with the energy storage apparatus 10.

The secondary cells 11 to mk are lithium-ion batteries, for example. The secondary cell is not limited to a lithium-ion battery, but may be another secondary cell such as a nickel metal hydride battery, lead-acid battery, and nickel-cadmium battery. Rechargeable batteries 4 to 7 may be different kinds of rechargeable batteries. The secondary cells 11 to mk comprise m batteries each including k secondary cells 11 to 1k, 21 to 2k, ... , m1 to mk that are connected in parallel. The m batteries are connected in series. The numbers of secondary cells and batteries are determined in accordance with the capacity of rechargeable batteries 4 to 7 during the design phase, and k and m are arbitrary numbers.

The voltage detector of each of rechargeable batteries 4 to 7 periodically detects the voltages of the secondary cells 11 to mk and reports the detected voltages to the energy storage apparatus 10 via a communication unit.

The current detector of each of rechargeable batteries 4 to 7 periodically detects the current of the batteries 4 to 7 and reports the detected current to the energy storage apparatus 10 via a communication unit.

The communication unit of each of rechargeable batteries 4 to 7 transmits a voltage value and a current value periodically supplied from the voltage detector and the current detector to a controller 11 of the energy storage apparatus 10 that is described later by wired or wireless communication.

The energy storage apparatus 10 comprises a DC/DC convertor 12, DC switches S1 to S4 connected to rechargeable batteries 4 to 7, respectively, the controller 11 controlling operation of the energy storage system including the energy storage apparatus 10. In the present embodiment, four DC switches S1 to S4 are provided; however, the number of DC switches is not limited thereto.

DC switches S1 to S4 switch electrical connections between rechargeable batteries 4 to 7 and a plurality of connection terminals T1 to T4. The first connection terminal T1 is electrically connected to the AC/DC two-way converter 3 provided external to the energy storage apparatus 10. The second connection terminal T2 is used to switch a connection to a discharge terminal TA of the DC/DC convertor 12 described later. The third connection terminal T3 is used to switch a connection to a charge terminal TB of the DC/DC convertor 12 described later. The fourth connection terminal T4 is not connected to any terminals, and is electrically isolated. The switching of DC switches S1 to S4 is controlled by the controller 11.

Because of the AC/DC two-way converter 3, rechargeable batteries 4 to 7 can be charged by energy provided from the AC power source 1 by connecting each of DC switches S1 to S4 to terminal T1.

The DC/DC convertor 12 comprises the discharge terminal TA and the charge terminal TB. The DC/DC convertor 12 steps up the voltage of the DC power supplied from the discharge terminal TA and outputs the resultant power from the charge terminal TB. The operation of the DC/DC convertor 12 is controlled by the controller 11.

The controller 11 receives the voltage values and the current values detected at rechargeable batteries 4 to 7, and acquires the voltage value and the current value of the AC power supplied from the AC power supply line LAC. The controller 11 controls the AC/DC two-way converter 3 to suppress change in the supplied power from the AC power supply line LAC based on a state-of-charge (SOC) calculated by the voltage values and the current values of rechargeable batteries 4 to 7, and the voltage values and the current values of the AC power supply line LAC.

The controller 11 is capable of performing charge refresh of rechargeable batteries 4 to 7 or equalization of energy by controlling the operation of DC switches S1 to S4 and the DC/DC convertor 12 at the same time of suppressing change in the supplied power from the AC power supply line LAC.

An operation example of the energy storage apparatus 10 and the energy storage system will be described below.

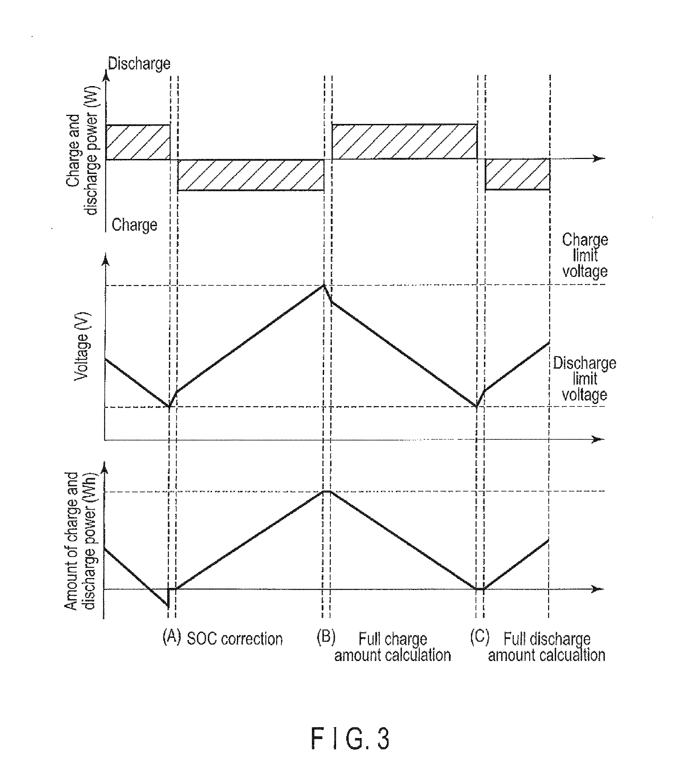

FIG. 3 illustrates an example of charge refresh in the energy storage apparatus 10 and the energy storage system.

First, the controller 11 selects from rechargeable batteries 4 to 7 a target rechargeable battery (a first rechargeable battery) to be charge-refreshed. The controller 11 then selects from rechargeable batteries 4 to 7, with the exception of the first rechargeable battery, a rechargeable battery (a second rechargeable battery) to be used as a charge repository.

In the following explanation, it is assumed that the controller 11 selects rechargeable battery 4 to be charge-refreshed and rechargeable batteries 5 and 6 to be used as charge repositories. In this case, rechargeable battery 7 is used to stabilize energy supply in the AC power supply line LAC. The controller 11 stabilizes energy supply while performing charge refresh, as described below.

There is a case where charge refresh is not successful depending on the states of charge of the target rechargeable battery 4 and a rechargeable battery used as a charge repository. To avoid this, two rechargeable batteries are used as charge repositories in this embodiment.

In the case where the states of charge of the target rechargeable battery 4 and a rechargeable battery used as a charge repository are 50% or more, if rechargeable battery 4 is discharged to a predetermined discharge limit, the rechargeable battery used as a charge repository may not be able to receive the discharged energy. For example, if the state-of-charge of rechargeable battery 4 is 60% and that of rechargeable battery 5 is 70%, rechargeable battery 5 cannot receive all the discharged energy from rechargeable battery 4 when rechargeable battery 4 is fully discharged.

The controller 11 may calculate the states of charge from the voltages or currents of rechargeable batteries 4 to 7 prior to selecting rechargeable batteries to be used as charge repositories, selecting a rechargeable battery whose state-of-charge is 50% or less. That is, the controller 11 may calculate the states-of-charge of the rechargeable batteries prior to selecting those to be used as charge repositories, and select a rechargeable battery for which X1% < 50%, where X1% represents the state-of-charge.

If the state-of-charge of the target rechargeable battery to be charge-refreshed is greater than the value obtained by subtracting the state-of-charge of the rechargeable battery used as a charge repository from 100%, the target rechargeable battery cannot be fully discharged. In this case, the controller 11 continues selecting other rechargeable batteries until the sum of values obtained by subtracting the states-of-charge of the rechargeable batteries used as charge repositories from 100% becomes greater than the state-of-charge of the target rechargeable battery. If the sum of the state-of-charge of the target rechargeable battery and the states-of-charge of the rechargeable batteries used as charge repositories is 100% or less, the target rechargeable battery can be discharged to the discharge limit.

Concretely, when selecting the target rechargeable battery, the controller 11 calculates the state-of-charge from the voltage and current of the selected rechargeable battery. It is assumed that the state-of-charge of the target rechargeable battery is X1%, and the state-of-charge of the rechargeable battery used as a charge repository is X2%. If X1% > (100% - X2%), another rechargeable battery is selected since the target rechargeable battery cannot be discharged to the discharge limit.

Assuming that the states-of-charge of the additionally selected rechargeable batteries are X3%, ..., Xn%. The additional rechargeable batteries are selected until when X1% ≤ (100% - X2%) + (100% - X3%) + ... + (100% - Xn%). By selecting rechargeable batteries used as charge repositories as mentioned above, the target rechargeable battery can be discharged to the discharge limit and recharged to the original state-of-charge.

If the state-of-charge of the target rechargeable battery or the state-of-charge of the rechargeable battery used as a charge repository is greater than a predetermined value, a large number of rechargeable batteries are necessary, and the number of rechargeable batteries used for suppressing change in the supplied power from the AC power supplement line LAC decreases. To avoid unstable power supply to the load 2 from the AC power supplement line LAC, it is desirable that the controller 11 selects at most two rechargeable batteries used as charge repositories by comparing the states-of-charge of rechargeable batteries.

After selecting the target rechargeable battery 4 to be charge-refreshed and rechargeable batteries 5 and 6 used as charge repositories, the controller 11 connects DC switch S1 to the second connection terminal T2, connects DC switches S2 and S3 to the third connection terminal T3, and connects DC switch S4 to the first connection terminal T1.

The controller 11 starts discharge of rechargeable battery 4 with a rated power from the charging state at the time of starting refresh charge, and controls the DC/DC convertor 12 to set up DC power supplied to the discharge terminal TA to a predetermined voltage and to output the DC power from the charge terminal TB. For example, if DC power with about 200 V is supplied from the discharge terminal TA, the DC/DC convertor 12 sets up the DC power to about 400 V and outputs the DC power from the charge terminal TB to charge rechargeable batteries 5 and 6.

The controller 11 observes voltages and currents of rechargeable batteries 4, 5 and 6. When the voltage of rechargeable battery 4 reaches a discharge limit voltage, the discharge power is set to 0 Wh, and the controller 11 sets the state-of-charge of rechargeable battery 4 to 0% (timing A).

Then, the controller starts charge from the state where the discharge power of rechargeable battery 4 is 0 Wh. The controller 11 connects DC switch S1 to the third connection terminal T3, and connects DC switches S2 and S3 to the second connection terminal T2. The controller 11 then controls DC/DC convertor 12 to set up the DC power supplied to the discharge terminal TA from rechargeable batteries 5 and 6 to a predetermined voltage and to output the DC power from the charge terminal TB, in order to charge rechargeable battery 4.

The controller 11 observes voltages and currents of rechargeable batteries 4, 5 and 6, and integrates values of currents received from rechargeable battery 4 to calculate a charge power. The charge power (Wh) at the time when the voltage of rechargeable battery 4 reaches a charge limit voltage is the present full charge amount of rechargeable battery 4. The controller 11 detects a difference between the present full charge amount and the full charge amount of rechargeable battery 4 stored in the controller 11. If the difference is detected, the controller updates the full charge amount to the present full charge amount (timing B).

Following the above operation, the controller 11 discharges rechargeable battery 4 with a rated power. The controller 11 connects DC switch S1 to the second connection terminal T2, and connects DC switches S2 and S3 to the third connection terminal T3. The controller 11 then controls DC/DC convertor 12 to set up the DC power supplied to the discharge terminal TA from rechargeable battery 4 to a predetermined voltage and to output the DC power from the charge terminal TB, in order to charge rechargeable batteries 5 and 6.

The controller 11 observes voltages and currents of rechargeable batteries 4, 5 and 6, and integrates values of currents received from rechargeable battery 4 to calculate a discharge power. The discharge power at the time when the voltage of rechargeable battery 4 reaches a discharge limit voltage is the present full discharge amount of rechargeable battery 4. The controller 11 detects a difference between the present full discharge amount and the full discharge amount of rechargeable battery 4 stored in the controller 11. If the difference is detected, the controller updates the full charge amount to the present full charge amount (timing C).

If the voltage of one of rechargeable batteries 5 and 6 reaches the charge limit voltage before the voltage of rechargeable battery 4 reaches the discharge limit voltage while discharging rechargeable battery 4, the controller 11 controls the DC switch connected to the rechargeable battery whose voltage reaches the charge limit voltage to switch to the first connection terminal T1 or the fourth connection terminal T4 in order to stop charging. The controller 11 then performs charging only to the other rechargeable battery that has not reached the charge limit voltage.

Similarly, if the voltage of one of rechargeable batteries 5 and 6 reaches the discharge limit voltage before the voltage of rechargeable battery 4 reaches the charge limit voltage while charging rechargeable battery 4, the controller 11 controls the DC switch connected to the rechargeable battery whose voltage reaches the discharge limit voltage to switch to the first connection terminal T1 or the fourth connection terminal T4 in order to stop discharging. The controller 11 charges rechargeable battery 4 only by using the other rechargeable battery that has not reached the discharge limit voltage.

After completion of charge refresh of rechargeable battery 4, when rechargeable battery 4 subjected to the charge refresh and rechargeable batteries 5 and 6 used for the charge refresh are connected to the other rechargeable battery 7 performing cooperative work with the power grid, the controller 11 observes the states-of-charge and voltages of rechargeable batteries 4, 5, 6 and 7. If the difference between the state-of-charge of rechargeable battery 7 performing cooperative work with the power grid and the states-of-charge of rechargeable batteries 4 to 6 is less than or equal to a predetermined threshold, and the DC voltage of rechargeable battery 7 and the DC voltages of rechargeable batteries 4 to 6 is less than or equal to a predetermined threshold, the controller 11 connects DC switches 31 to S3 to the third connection terminal T3.

This is because if rechargeable batteries 4 to 7 are connected in the case where the differences in state-of-charge and voltage between rechargeable battery 7 and rechargeable batteries 4 to 6 are large, large current flows to the rechargeable battery whose voltage is low, and the rechargeable battery may be damaged. In this embodiment, thresholds of the differences in state-of-charge and voltage between rechargeable batteries 4 to 6 and rechargeable battery 7 performing cooperative work with the power grid are preset, and rechargeable batteries 4 to 6 are connected to rechargeable battery 7 only if the actual differences in state-of-charge and voltage is less than or equal to the thresholds. This prevents the batteries from being damaged. By so doing, an energy storage apparatus and an energy storage system with a high level of security and a high degree of reliability.

With the method of performing charge refresh between rechargeable batteries 4, 5 and 6 by switching DC switches S1 to S4 as stated above, charge refresh can be performed within the energy storage system without receiving energy from or outputting energy to the AC power supply line LAC.

In addition, in the present embodiment, rechargeable batteries not to be charge-refreshed or used as charge repositories can be used for suppressing change in the supplied power from the AC power supply line LAC. That is, the controller 11 performs charge refresh while controlling the AC/DC two-way converter 3 to charge or discharge rechargeable battery 7 in accordance with the change in the supplied power from the AC power supply line LAC.

In other words, in the energy storage system including n parallel rechargeable batteries, if charge refresh is performed for each rechargeable battery by performing charge and discharge between j rechargeable batteries, the amount of (1-j/n) relative to the total energy of n parallel rechargeable batteries can be used for another purpose than charge refresh, such as suppression of change in the supplied power from the AC power supply line. Further, since the energy of the rechargeable battery to be charge-refreshed is charged to the other rechargeable batteries, excess energy output or supply relative to the power grid are prevented. This stabilizes energy of the power grid.

In the present embodiment, there is no need to provide multiple DC/DC converters connected to each of rechargeable batteries 4 to 7. This prevent the energy storage apparatus 10 and the energy storage system from being upsized.

As stated above, with the energy storage apparatus 10 and the energy storage system according to the present embodiment, calculation of full charge amount or correction of state-of-charge can be performed at the same time as performing suppression of change in the supplied power from the AC power supply line LAC, and downsized energy storage apparatus and energy storage system can be provided.

In addition, with the energy storage apparatus and the energy storage system according to the present embodiment, since charge and discharge can be performed within the plurality of rechargeable batteries 4 to 7, energy stored in rechargeable batteries 4 to 7 can be equalized by switching DC switches S1 to S4. For example, if a rechargeable battery having a large amount of energy is discharged for equalization, energy is output to the power grid, and the power supply from the AC power supply line LAC may be unstable. Further, if a rechargeable battery having a large amount of energy is discharged by using a load such as a resistance for equalization, efficiency of energy use may be decreased. To solve such problems, in the present embodiment, charge and discharge are performed within the plurality of rechargeable batteries 4 to 7 in order not to affect power supply of the AC power supply line LAC. The present embodiment, therefore, can equalize energy while suppressing decrease of efficiency of energy use.

Further, when equalizing energy, it is not necessary to equalize all rechargeable batteries 4-7 at the same time, and some of rechargeable batteries 4 to 7 can be used for suppressing change in the supplied power from the AC power supply line LAC while the other rechargeable batteries are equalizes.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

For example, in the present embodiment, each of DC switches S1 to S4 comprise the fourth connection terminal T4; however, the fourth connection terminal T4 can be omitted. The connection between the energy storage apparatus 10 and rechargeable batteries 4 to 7 can be blocked by not connecting DC switches S1 to S4 to any of the first connection terminal T1, the second connection terminal T2 and the third connection terminal T3.

## Claims

1. An energy storage apparatus (10) **characterized by** comprising:
a DC/DC convertor (12) comprising a discharge terminal (TA) and a charge terminal (TB), the DC/DC convertor (12) being configured to set up a voltage of a DC power supplied from the discharge terminal (TA) and to output the DC power from the charge terminal (TB);
a plurality of switches (S1 to S4) configured to switch connections between a rechargeable batteries (4 to 7) and a first connection terminal (T1) electrically connected to an external device, a second connection terminal (T2) electrically connected to the discharge terminal (TA), and a third connection terminal (T3) electrically connected to the charge terminal (TB); and
a controller (11) configured to control operations of the DC/DC convertor (12) and the plurality of switches (S1 to S4),
wherein the controller (11) is configured to control the DC/DC convertor (12) to perform charge and discharge between a rechargeable battery connected to the discharge terminal (TA) via the switches (S1 to S4) and a rechargeable battery connected to the charge terminal (TB) via the switches (S1 to S4).

2. The energy storage apparatus (10) according to claim 1, **characterized in that** each of the switches (S1 to S4) further comprising a fourth connection terminal (T4) electrically isolated.

3. An energy storage system **characterized by** comprising:
the energy storage apparatus (10) according to claim 1; a plurality of rechargeable batteries connected to respective switches (S1 to S4); and
an AC/DC two-way converter (3) connected to the first connection terminal (T1) and an AC power supply line (LAC), the AC/DC two-way converter (3) being configured to convert DC power supplied from the energy storage apparatus (10) to AC power to output the AC power to the AC power supply line (LAC), and to convert the AC power supplied from the AC power supply line (LAC) to DC power to output the DC power to the energy storage apparatus (10).

4. The energy storage system according to claim 3,
**characterized in that** the controller (11) selects a first rechargeable battery and a second rechargeable battery from the rechargeable batteries (4-7), switches the switch connected to the first rechargeable battery to connect the first rechargeable battery to the discharge terminal (TA), switches the switch connected to the second rechargeable battery to connect the second rechargeable battery to the charge terminal (TB), charges the second rechargeable battery by setting up voltage of discharged energy of the first rechargeable battery by the DC/DC convertor (12), switches the switch connected to the first rechargeable battery to connect the first rechargeable battery to the charge terminal (TB), switches the switch connected to the second rechargeable battery to connect the second rechargeable battery to the discharge terminal (TA), charges the first rechargeable battery by setting up voltage of discharged energy of the second rechargeable battery by the DC/DC convertor (12), and switches the switches connected to the rechargeable batteries except the first and second rechargeable batteries to be connected to the AC/DC two-way converter (3).

5. The energy storage system according to claim 4,
**characterized in that** the controller (11) calculates states of charge of the rechargeable batteries (4-7) prior to selecting the second rechargeable battery, and selects the second rechargeable battery whose state-of-charge is 50% or less.

6. The energy storage system according to claim 4,
**characterized in that** when the state-of-charge of the first rechargeable battery is greater than a value obtained by subtracting the state-of-charge of the second rechargeable battery from 100%, the controller (11) further selects an additional second rechargeable battery, and the controller (11) continues selecting additional second rechargeable batteries until the state-of-charge of the first rechargeable battery becomes less than or equal to a sum of values obtained by subtracting the states-of-charge of the second rechargeable batteries from 100%.
